# EUROPÄISCHE PATENTANMELDUNG

(11) **EP 1 336 786 A2**
(43) Veröffentlichungstag der Anmeldung: **20.08.2003**
(21) Anmeldenummer: 03003025.8
(22) Anmeldetag: 12.02.2003
(51) Int. Cl.: F16K 31/08, F16K 31/06

(54) **Bistabiles elektromagnetisches Ventil**

(30) Priorität: 19.02.2002 DE 10206778
(71) Anmelder: SCHROTT, Harald, 88131 Lindau (DE)
(72) Erfinder: Ott, Hubert, 88212 Ravensburg (DE); Grau, Thomas, 88260 Argenbühl (DE)
(74) Vertreter: Roth, Klaus

(57) **Zusammenfassung**

Es wird ein bistabiles elektromagnetisches Ventil (1) mit einer zwischen zwei Polschuhen (5, 6) angeordneten Ventilkammer (15) und einem darin zwischen zwei Endstellungen verschiebbaren Ventilkörper (12), der als Magnetanker für wenigistens einen Permanentmagneten (9, 10) und für wenigstens eine Steuerspule (3) ausgebildet ist, vorgeschlagen, das sich durch eine besonders kompakte Bauweise und durch geringen Fertigungsaufwand auszeichnet. Dies wird erfindungsgemäß dadurch erreicht, dass wenigstens ein Permanentmagnet (9, 10) im Inneren des Ventilgehäuses (2) angeordnet ist.

## Beschreibung

Die Erfindung betrifft ein bistabiles elektromagnetisches Ventil nach dem Oberbegriff des Anspruchs 1.

Derartige Ventile werden beispielsweise in Kühlmittelkreisläufen verwendet, wie sie in den Druckschriften DE 37 18 490 oder EP 1 054 200 beschrieben sind.

Bei solchen Ventilen wird eine bistabile Situation dadurch erreicht, dass Permanentmagnete außerhalb des Ventilgehäuses neben der Ventilkammer oder neben den Polschuhen angeordnet sind, so dass der Ventilkörper zwei Endpositionen an den Polschuhen besitzt, in denen er durch diese Permanentmagnete gehalten wird.

Die Ventile der bekannten Art besitzen in einer Ausführungsform eine Steuerspule, die in axialer Verlängerung eines Pols angeordnet ist, so dass sich unterschiedliche Anzugskräfte für die beiden Endstellungen des Ventilkörpers bei Betätigung der Steuerspule ergeben. Eine andere ebenfalls bekannte Anordnung der Steuerspule liegt seitlich neben der Ventilkammer, wodurch sich zwar eine gleichmäßige Verteilung der Anzugskräfte der Steuerspule auf den Ventilkörper in beiden Endstellungen ergibt, die Permanentmagnete jedoch aufgrund fehlender oder zumindest nicht geschlossener Rückschlussbleche vergleichsweise groß dimensioniert werden müssen, was einen entsprechenden Fertigungsaufwand bedeutet.

Die Erfindung hat gegenüber dem geschilderten Stand der Technik die Aufgabe, ein Ventil vorzuschlagen, das in kompakter Bauweise mit wenig Aufwand zu fertigen ist.

Diese Aufgabe wird bei einem Ventil gemäß dem Oberbegriff des Anspruchs 1 durch die kennzeichnenden Merkmale gelöst.

Durch die in den Unteransprüchen genannten Maßnahmen sind vorteilhafte Ausführungen und Weiterbildungen der Erfindung möglich.

Dementsprechend zeichnet sich ein erfindungsgemäßes Ventil dadurch aus, dass wenigstens ein Permanentmagnet im Innenraum der Ventilkammer angeordnet ist. Hierbei wird in Kauf genommen, dass der Permanentmagnet in Kontakt mit dem das Ventil durchströmenden Fluid kommt. Der Vorteil bei dieser Anordnung liegt jedoch darin, dass der Permanentmagnet unmittelbar in der Nähe des Ventilkörpers bzw. der Polschuhe angeordnet und somit kleiner dimensionierbar ist.

In einer besonderen Ausführungsform der Erfindung kann hierbei eine so kompakte Bauweise erreicht werden, dass die Ventilkammer vollständig innerhalb der Steuerspule angeordnet ist. Neben der einfachen Einleitung der magnetischen Feldlinien der Steuerspule in axialer Richtung der Ventilkammer ergeben sich hierdurch noch weitere Vorteile.

So kann beispielsweise das komplette Ventil mit den ohnehin vorgesehenen Befestigungselementen der Steuerspule am jeweiligen Einsatzort befestigt werden.

In einer Weiterbildung der Erfindung werden wenigstens zwei Permanentmagnete vorgesehen, die in axialer Richtung voneinander beabstandet angeordnet sind. Hierdurch können die beiden Endstellungen des Ventilkörpers durch größere Anzugskräfte der Permanentmagnete stabiler ausgestaltet und somit auch die Dichtigkeit des Ventils in der jeweiligen Stellung verbessert werden.

In einer besonderen Ausführungsform der Erfindung wird die Polarisationsrichtung der Permanentmagnete parallel zur Bewegungsrichtung des Ventilkörpers gewählt. Durch eine solche Polarisationsrichtung wird die Stabilität der Endlagen des Ventilkörpers weiter verbessert.

Darüber hinaus ist bei einer solchen Polarisationsrichtung in einer Weiterbildung der Erfindung der Einsatz von Ringmagneten möglich, die den jeweiligen Ventilsitz umgeben und mit dem jeweils gleichnamigen Pol zur Ventilkammer hin gerichtet sind. Eine solche Ausführungsform ist besonders kompakt zu verwirklichen. Darüber hinaus bietet diese Bauform den Vorteil, dass die daraus entstehenden Magnetfelder drehsymmetrisch bezüglich der Mittelachse des Ventils ausgebildet sind, wodurch sich ein guter achsenparalleler Anzug des als Magnetanker ausgebildeten Ventilkörpers ergibt.

In einer Weiterbildung der Erfindung können derartige Ringmagnete auf den jeweiligen Polschuh aufgeschoben werden, der vorzugsweise in Bereich des Dichtsitzes hierzu eine Ringschulter aufweist. Der jeweilige Ringmagnet kann somit durch einfaches Aufstecken auf den zugehörigen Polschuh bis zum Anschlag an der Ringschulter montiert werden.

Vorteilhafterweise wird zusätzlich ein Distanzring vorgesehen, der den Abstand zwischen den Permanentmagneten und somit zwischen den Polschuhen definiert. Die Polschuhe und die Permanentmagnete können somit mit Hilfe des Distanzringes durch einfaches Aneinanderfügen genau zueinander positioniert und anschließend innerhalb des Ventilgehäuses fixiert werden.

Vorteilhafterweise wird der Ventilkörper als Kugel ausgebildet. Ein kugelförmiger Ventilkörper kann unmittelbar auf einen zugehörigen Dichtsitz, beispielsweise einem Kegelsitz dichtend aufsitzen, ohne dass weitere Schließelemente am Ventilkörper erforderlich sind.

Bei Ausführungen gemäß dem bisherigen Stand der Technik wurden separate Kugeln als Dichtelemente an einem entsprechend größer dimensionierten Ventilköper angebracht. Die Ausgestaltung des Ventilkörpers als Kugel verkleinert nicht nur die Bauform des Ventilkörpers, sondern sorgt zugleich für eine gute Beweglichkeit des Ventilkörpers mit geringstmöglicher Reibung an den Ventilkammer sowie für eine gute Zentrierung in einem beispielsweise kegelförmigen Dichtsitz.

Durch die geringe Masse des Ventilkörpers in Form einer Kugel verringert sich zudem der Aufprallimpuls des Ventilkörpers auf dem Dichtsitz, wodurch sich zum einen eine geringere Geräuschentwicklung und zum anderen eine deutlich längere Lebensdauer des Ventils ergibt. Durch die geringere Belastung des Ventilsitzes sind die Anforderungen und somit der Aufwand bei dessen Fertigung reduziert. Gegebenenfalls kann sogar auf eine Härtung des Ventilsitzes bzw. des den Ventilsitz umfassenden Polschuhs verzichtet werden.

Für die Führung des Ventilkörpers, insbesondere eines kugelförmigen Ventilkörpers wie oben angeführt, wird vorteilhafterweise ein Führungsring im Inneren der Ventilkammer vorgesehen, der dem Ventilkörper eine äußere Führung vorgibt. In einer besonderen Weiterbildung der Erfindung kann der Führungsring zugleich als Distanzring für den bzw. die Permanentmagnete ausgestaltet werden.

Weiterhin wird vorteilhafterweise ein Filterelement vorgesehen, um Schmutzpartikel von dem Dichtsitz fernzuhalten, was letztendes zu Fehlfunktionen führen könnte. Vor allem bei Kältemittelkreisläufen werden einerseits hohe Anforderungen an die Dichtigkeit gestellt, während andererseits bei dem Zusammenbau derartiger Kältemittelkreisläufe der Eintrag von Schmutzpartikel, beispielsweise durch Lötvorgänge oder sonstige Bearbeitungsschritte nicht vollständig vermeidbar ist. Da der Schmutzeintrag nur durch Fertigungsschritte verursacht wird, kann durch ein Filterelement, das für eine einmalige Reinigung des im abgeschlossenen Kreislauf befindlichen Fluids eine ausreichende Kapazität aufweist, dauerhaft die Verschmutzung der Ventilsitze verhindert werden.

In einer besonders vorteilhaften Ausführungsform der Erfindung wird das Filterelement zugleich als Führungsring für den Ventilkörper ausgestaltet. Darüber hinaus kann das Filterelement auch als Distanzring zwischen den Permanentmagneten ausgebildet werden. In beiden Bauformen wird die Anzahl der benötigten Ventilkomponenten reduziert.

In einer besonders vorteilhaften Weiterbildung der Erfindung wird ein einziges Bauelement zugleich als Distanzring, Führungsring und Filterelement ausgestaltet, so dass alle drei Funktionen durch ein einziges Bauelement erbracht werden, wodurch die Anzahl der Komponenten für diese Funktionen minimiert ist.

Vorzugsweise wird das Ventilgehäuse als Rundrohr ausgebildet. Ein Rundrohr lässt sich besonders einfach ins Innere einer Steuerspule einführen, die üblicherweise einen zylinderförmigen Durchgang aufweist. Gegebenenfalls können hierzu an der Außenseite Adapterhülsen vorgesehen werden, um das Rundrohrgehäuse passgenau und spielfrei im Innern der Steuerspule zu zentrieren und um den Magnetfluss der Steuerspule zu verbessern, das heißt zu erhöhen.

Darüber hinaus bietet ein Rundrohrgehäuse eine zylindrische Innenwand, an der flächig dichtende Verbindungen, z.B. zu einem Polschuh oder sonstigen Baukomponenten hergestellt werden können.

Das Ventilgehäuse wird darüber hinaus vorzugsweise einstückig ausgebildet, so dass Verbindungsstellen mit den dadurch entstehenden Dichtigkeitsproblemen und Prüfungen entfallen. In Verbindung mit einem Rundrohrgehäuse ergibt sich eine besonders einfache einstückige Bauform, bei der beispielsweise endseitig lediglich noch Anschlussrohre anzubringen sind. Die Anschlussrohre können hierbei eingelötet oder durch entsprechende anderweitige bekannte Verbindungsmaßnahmen am Ventilgehäuse z.B. verpresst angebracht werden.

Vorteilhafterweise wird wenigstens ein Polschuh mit einem oder mehreren Fluidkanälen außerhalb der Ventilachse bzw. außerhalb des Wirkungsbereichs des Ventilkörpers versehen, so dass eine ständige Verbindung zwischen dem Inneren der Ventilkammer, in der sich der Ventilkörper befindet, und dem entsprechenden Ventilanschluss auf der Seite dieses Polschuhs ergibt. Diese Verbindung zwischen dem zugehörigen Anschluss und der Ventilkammer bleibt unbeeinflusst von der Bewegung des Ventilkörpers stets erhalten. Der bzw. die besagten Fluidkanäle können hierbei außerhalb oder innerhalb des Polschuhs (beispielsweise durch Bohrungen oder dergleichen) vorgesehen werden.

Vorteilhafterweise werden mehrere rundum verteilte Fluidkanäle vorgesehen, um eine gleichmäßige Anströmung der Ventilkammer und somit definierte Strömungsverhältnisse und einen definierten Strömungswiderstand des Ventils zu erreichen.

In einer Weiterbildung dieser Ausführungsform wird ein Polschuh mit einem nicht kreisförmigen Querschnitt versehen, so dass sich der Fluidkanal bzw. die Fluidkanäle durch die sich dadurch ergebenden Zwischenräume zwischen Polschuh und Innenwandung des Ventilgehäuses bilden.

Eine mögliche Ausführungsform für solche Fluidkanäle besteht beispielsweise darin, einen zunächst zylinderförmigen Polschuh mit außenseitigen Abflachungen zu versehen, so dass sich zwischen den sich dadurch ergebenden Fluidkanälen nach wie vor noch Bereiche ergeben, an denen der Polschuh passgenau an der Innenwandung des Ventilgehäuses anliegt und sich somit ein zentrischer Sitz des Polschuhs im Ventilgehäuse ergibt.

Eine weitere vorteilhafte Ausführungsform der Erfindung sieht vor, die Fluidkanäle an den Permanentmagneten vorbeizuführen. Dies ist insbesondere in einer Ausführungsform gewährleistet, bei der ein oder mehrere Ringmagnete sowie eine außenseitige Führung der Fluidkanäle vorgesehen sind. Die Anströmung des einen oder der mehreren Permanentmagnete mit Fluid sorgt für eine zusätzliche Filterwirkung, indem magnetische Partikel am Permanentmagneten zurückgehalten werden.

Die Montage des Ventils, insbesondere in der vorbeschriebenen Bauweise mit Ringmagneten und Distanzhülse kann beispielsweise dadurch bewerkstelligt werden, dass die gesamte Anordnung bestehend aus zwei Polschuhen, Distanzhülse und kugelförmigen Ventilköper zusammengefügt im Innern eines Rohres angebracht und verpresst und/oder verlötet wird. Die Verpressung und/oder Verlötung kann hierbei zugleich eine Dichtfunktion zwischen einem Polschuh und dem Gehäuse ergeben, wobei insbesondere bei einer Verpressung vorzugsweise eine große Kontaktfläche zwischen dem Gehäuse und dem dicht anzubringenden Polschuh vorgesehen wird.

Gegebenenfalls können hierzu auch Dichtelemente, z.B. aus Elastomer, Teflon oder dergleichen vorgesehen werden.

Weitere Vorteile können durch Einpressen einer äußeren Sicke bewirkt werden. So kann beispielsweise eine Fixierung passgenauer innerer Baukomponenten in axialer Richtung durch eine oder mehrere solcher Sicken vorgegeben werden.

Der Führungs-, Filter- und/oder Distanzring wird vorzugsweise sowohl in axialer Richtung als auch in radialer Richtung fluiddurchlässig ausgebildet. Insbesondere in Verbindung mit Fluidkanälen entlang der Innenwandung des Gehäuses ergeben sich hierbei verschiedene Vorteile.

Zum einen ist gewährleistet, dass trotz passgenauem Aneinanderfügen der einzelnen ringförmigen Bauelemente die Ventilkammer vollständig und gleichmäßig mit Fluid beaufschlagt wird. Zum anderen werden im Falle zweier Ringmagnete beide Ringmagnete durch das Fluid angeströmt, so dass sich die magnetische Filterwirkung gegenüber magnetischen Schmutzpartikeln verbessert. Weiterhin wird für eine gute und gleichmäßige Durchströmung des Filterrings gesorgt, so dass eine gleichmäßige Beladung des Filterrings mit Schmutzpartikel gewährleistet ist.

In einer Weiterbildung der Erfindung kann zusätzlich ein äußeres Grobfilter vorgesehen werden, beispielsweise durch einen Siebeinsatz, der in das rohrförmige Gehäuse eingesetzt wird.

Das erfindungsgemäße Ventil kann als sogenanntes 2/2 Wege-Ventil ausgebildet werden. Hierbei ist lediglich in einem Pol eine Durchgangsbohrung vorgesehen, die ventilkammerseitig in einen Dichtsitz mündet. Dieser Polschuh wird vorzugsweise außenseitig dicht mit dem Ventilgehäuse verbunden, beispielsweise verpresst oder verlötet. Der andere Polschuh weist die oben geschilderten Fluidkanäle auf, so dass die Ventilkammer über die Seite dieses Polschuhs ständig mit Fluid angeströmt werden kann. Der kugelförmige Ventilanker weist zwei stabile Endlagen jeweils an einem der beiden Polschuhe auf, wobei der Ventilsitz der Durchgangsbohrung des einen Polschuhes entweder verschlossen oder geöffnet ist.

Um eine symmetrische Anordnung und auch bei geöffnetem Ventil eine gut zentrierte Position des kugelförmigen Ventilankers zu erreichen, kann in dem dem Dichtsitz gegenüberliegenden Polschuh eine entsprechende Sackbohrung mit einem dem Dichtsitz entsprechenden Kegelsitz angebracht werden.

Die Erfindung lässt sich auch als sogenanntes 3/2 Wege-Ventil ausgestalten. Hierzu sind beide Polschuhe mit einer entsprechenden Durchgangsbohrung und jeweils einem Ventilsitz zu versehen. Auf Seiten des Polschuhs mit außenseitigen Fluidkanälen wird hierbei vorzugsweise ein zentrales Rohr in eine in Verlängerung der Durchgangsbohrung sitzende Bohrung des Polschuhs eingesetzt und dort dicht verbunden, beispielsweise verpresst oder verlötet. Gegebenenfalls kann an dieser Stelle auch ein Dichtelement zwischen dem zentralen Rohr und dem Polschuh vorgesehen werden.

In der vorgeschilderten Ausführungsform wird anschlussseitig das zentrale Rohr aus dem Ventilgehäuse herausgeführt und dort dicht mit dem Gehäuse verbunden, beispielsweise verpresst oder verlötet. Dieses zentrale Rohr kann dann unmittelbar als Anschlussrohr für den Fluidkreislauf, beispielsweise den Kältemittelkreislauf verwendet werden. Gegenüber dem Ventilgehäuse kann dieses zentrale Rohr gleichzeitig in einem Montageschritt z.B. durch Verpressen oder Verlöten sowohl in radialer als auch in axialer Richtung fixiert werden.

Zwischen der Außenwandung des zentralen Rohrs und der Innenwandung des Ventilgehäuses befindet sich bei entsprechender Gestaltung der Durchmesser ein Zwischenraum, der über die äußeren Fluidkanäle des entsprechenden Polschuhs mit der Ventilkammer in Verbindung steht. Dieser Zwischenraum wird im Falle eines 3/2 Wege-Ventiles an eine Zuleitung angeschlossen, beispielsweise indem eine Rohrleitung in eine entsprechen Bohrung des Ventilgehäuses eingesetzt und dort dicht verbunden, beispielsweise verlötet wird.

In einer besonderen Ausführungsform der Erfindung wird von Anfang an ein T-förmiges oder Y-förmiges Rohrgehäuse vor der Montage der inneren Bauelemente vorgesehen. Die beiden Polschuhe mit Ringmagnet und Führungs-, Distanz- bzw. Filterring und gegebenenfalls mit Dichtelementen können hierbei gemeinsam mit dem zentralen Rohr in das Rohrgehäuse eingebracht und in einem einzigen Montagevorgang fixiert werden. Anschließend muss lediglich noch die Spule über den gerade durchgehenden Teil des rohrförmigen Ventilgehäuses geschoben werden und das Ventil ist fertiggestellt.

Ein Ausführungsbeispiel der Erfindung ist in der Zeichnung darstellt und wird anhand der Figuren nachfolgend näher erläutert.

Im Einzelnen zeigen
- Figur 1: einen Längsschnitt durch ein erfindungsgemäßes 2/2 Wege-Ventil und
- Figur 2: einen Längsschnitt durch ein entsprechendes 3/2 Wege-Ventil.

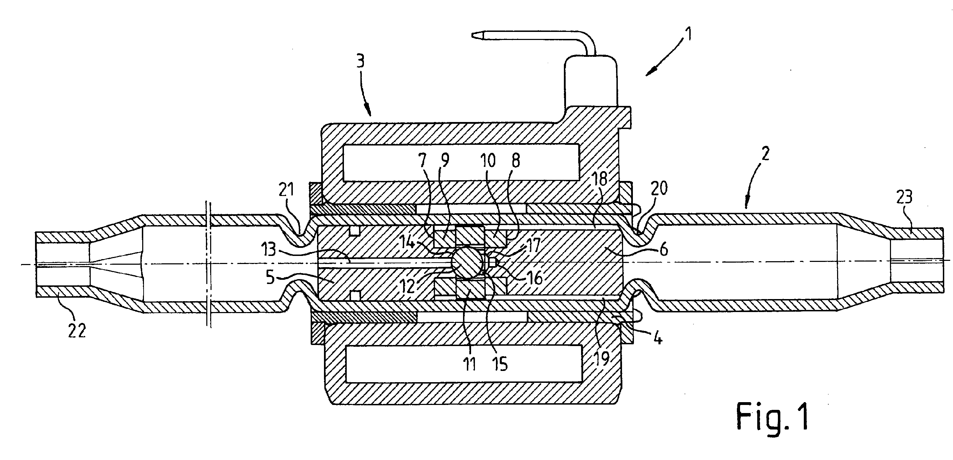

Das Ventil 1 gemäß Figur 1 umfasst ein rohrförmiges Ventilgehäuse, das eine Steuerspule 3 durchsetzt. Adapterstücke sorgen hierbei für einen guten Sitz und erhöhten Magnetfluss der Steuerspule des Ventilgehäuses 2 in der Steuerspule 3 bei Abweichungen des Außendurchmessers des Ventilgehäuses 2 vom Innendurchmesser der Steuerspule 3.

Im Inneren des Ventilgehäuses 2 sind im Bereich der Steuerspule 3 die inneren Baukomponenten des Ventils 1 angeordnet.

Im Einzelnen sind dies zwei Polschuhe 5, 6, die jeweils an ihrem inneren Ende eine Ringschulter 7, 8 aufweisen. Zwei Permanentmagnete 9, 10, die als Ringmagnete ausgebildet sind, sind auf die Polschuhe 5, 6 bis zum Anschlag an den Ringschultern 7, 8 aufgeschoben. Zwischen den Permanentmagneten 9, 10 ist ein Distanzring 11 eingelegt, der zugleich als Filterelement und Führungsring für einen kugelförmigen Ventilkörper 12 dient. Der Ventilkörper 12 ist aus einem magnetischen bzw. magnetisierbaren Material hergestellt und dient somit unmittelbar als Ventilanker.

In einem Polschuh 5 ist eine Durchgangsbohrung 13 angebracht, die in einem vorliegend kugelförmigen Ventilsitz 14, der jedoch auch anderweitig, zum Beispiel als Kegelsitz ausgebildet werden kann, im Inneren der Ventilkammer 15 ausmündet. Der gegenüberliegende Polschuh 6 weist lediglich eine Sackbohrung 16 mit einem endseitigen Kugelsitz 17 der ebenfalls auch anderweitig, zum Beispiel als Kugelsitz ausgebildet werden kann, für den Ventilkörper 12 auf.

Der Polschuh 6 ist außenseitig mit Abflachungen 18 versehen, so dass sich an dieser Stelle Fluidkanäle 19 zwischen dem Polschuh 6 und dem Ventilgehäuse 2 ausbilden.

Sämtliche inneren Bauelemente des Ventils 1 sind zwischen zwei rundum laufenden Sicken 20, 21 im Ventilgehäuse 2 verpresst und somit in axialer Richtung fixiert.

Endseitig sind am Ventilgehäuse 2 zwei Anschlussrohre 22, 23 angebracht, mit denen das Ventil an den jeweiligen Fluidkreislauf angeschlossen werden kann. Die Anschlussrohre 22, 23 sind im vorliegenden Ausführungsbeispiel an das Ventilgehäuse 2 einstückig angeformt, so dass keine Verbindungsstelle und somit keine Dichtprobleme an dieser Stelle vorliegt.

Die Fluidzufuhr des Ventils 1 gemäß Figur 1 erfolgt über das Anschlussrohr 23. Durch die Fluidkanäle 19 zwischen dem Polschuh 6 und dem Ventilgehäuse 2 gelangt das Fluid in den Bereich der Ventilkammer 15. Hierbei strömt es außenseitig zunächst am Permanentmagnet 10 entlang und gelangt dann in den sowohl in radialer als auch in axialer Richtung durchlässigen Distanzring 11. Hierdurch wird auch der gegenüberliegenden Permanentmagnet 9 angeströmt. Die Permanentmagnete 9, 10 weisen gegenüber dem Innendurchmesser des Ventilgehäuses 2 kleinern Außendurchmesser auf, so dass zwischen den Permanentmagneten 9, 10 und dem Ventilgehäuse 2 ausreichend Platz für die Fluidströmung und für die Anlagerung von magnetischen Schmutzpartikeln verbleibt. Der Distanzring 11 dient zudem als mechanisches Filterelement, um nichtmagnetische Schmutzpartikel aus dem Fluid zurückzuhalten, bevor diese ins Innere der Ventilkammer 15 vordringen. Zugleich bietet der Distanzring 11 eine Führung für den kugelförmigen Ventilkörper 12.

In der dargestellten Schaltstellung des Ventils 1 ist das 2/2 Wege-Ventil geschlossen, d.h. der Ventilkörper 12 sitzt auf dem Ventilsitz 14 und dichtet die Durchgangsbohrung 13 ab.

Durch Beaufschlagung der Steuerspule 3 kann der Ventilkörper 12 in die gegenüberliegende Position geschaltet werden, in der er am Kugelsitz 17 anschlägt und somit die Durchgangsbohrung 13 zum Innenraum der Ventilkammer 15 hin öffnet. Das Fluid kann in dieser Schaltstellung durch die Durchgangsbohrung 13 bis hin zum Anschlussrohr 22 fließen.

Die Permanentmagnete 9, 10 sind so gepolt, dass die jeweils gleichnamigen Pole nach innen, d.h. zum Distanzring 11 hin gerichtet und die entsprechenden anderen Pole zu den Anschlussrohren 22, 23 hin gerichtet sind. Die Polarisierungsrichtung der Permanentmagnete 9, 10 verläuft dementsprechend parallel zur Ventilachse. Dadurch ergibt sich ein Permanentmagnetfeld im Bereich des Ventilsitzes 14 bzw. des Kugelsitzes 17, durch das der Ventilkörper 12 in der jeweiligen Endstellung gehalten wird. Auf diese Weise wird die bistabile Ausgestaltung des Ventils 1 verwirklicht.

Durch die Anordnung der Permanentmagnete 9, 10 im Inneren des Ventilgehäuses 2 in unmittelbarer Nähe des Ventilkörpers 12 können diese sehr klein ausgelegt werden. Darüber hinaus bietet die Anordnung im Bereich des Ventilsitzes 14 bzw. des Kugelsitzes 17, d.h. also im Bereich der Endstellung des Ventilkörpers 12 eine besonders gute Kraftentfaltung der Permanentmagnete 9, 10, so dass auch bei vergleichsweise klein dimensionierten Magneten eine gute Dichtfunktion bzw. stabile Schaltstellung gewährleistet ist.

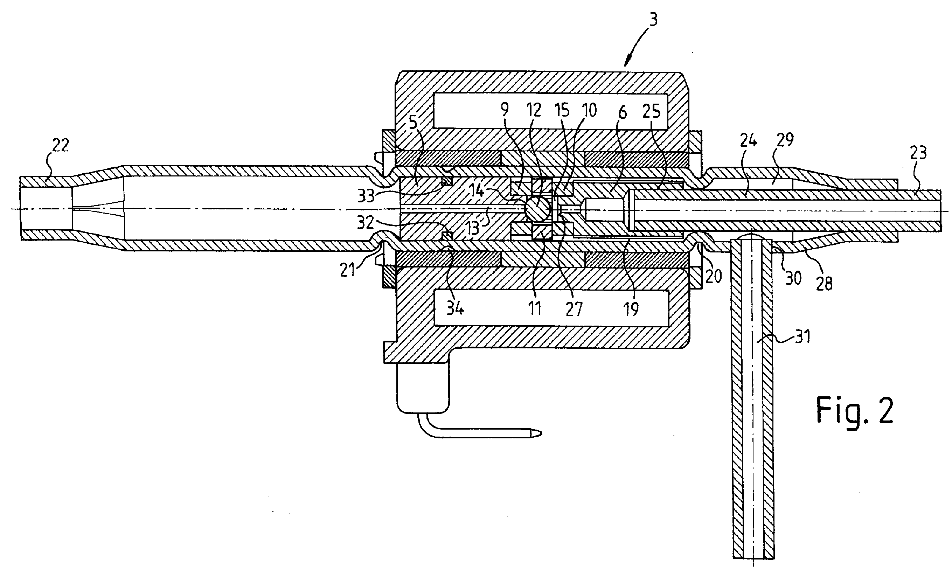

Die Ventilanordnung gemäß Figur 2 entspricht im Wesentlichen dem vorbeschriebenen Ausführungsbeispiel. Der Unterschied besteht darin, dass das Ventil gemäß Figur 2 als 3/2 Wege-Ventil ausgestaltet ist.

Hierzu wird in das Anschlussrohr 23 ein zentrales Rohr 24 eingesetzt, das sich bis hin zum Polschuh 6 erstreckt, der mit einer Aufnahmebohrung 25 versehen ist, um das zentrale Rohr 24 aufzunehmen.

Die Aufnahmebohrung 25 im Polschuh 6 wird über eine Durchgangsbohrung 26 bis ins Innere der Ventilkammer 15 verlängert. Im Mündungsbereich ist ein zum Beispiel kugeloder kegelförmiger Ventilsitz 27 im Polschuh 6 angebracht, der abwechselnd mit dem Ventilsitz 14 je nach Schaltstellung des Ventils geöffnet oder geschlossen wird.

Zwischen dem zentralen Rohr 24 und dem Gehäusebereich 28 ergibt sich ein Zwischenraum 29, der über eine Bohrung 30 an eine Zuleitung 31 angeschlossen ist.

In der dargestellten Ausführungsform ist weiterhin ein Dichtungselement 32 in einer Ringnut 33 des Polschuhs 5 eingelegt und, wie durch eine äußere Sicke 34 erkennbar ist, verpresst oder verlötet.

Das 3/2 Wege-Ventil gemäß Figur 2 besitzt eine Zuleitung 31 sowie zwei Ausgangsleitungen. Eine der Ausgangsleitungen wird wie im vorgenannten Ausführungsbeispiel durch das Anschlussrohr 22, die andere Ausgangsleitung wird jedoch nunmehr vom Anschlussrohr 23 gebildet, das in der 2/2 Wegeausführung als Zuleitung gedient hat.

Die Zuleitung geschieht über den Zwischenraum 29 hin zu den Fluidkanälen 19. Wie im vorgenannten Ausführungsbeispiel werden die Permanentmagnete 9, 10 und der Distanz- und Führungsring 11 angeströmt. Auch hier wirken die Permanentmagnete 9 und 10 als magnetische Filterelemente, um magnetische Schmutzpartikel festzuhalten, während der Distanz- und Führungsring 11 als Filterring ausgebildet ist, der in radialer und in axialer Richtung fluiddurchlässig ist. Auf diese Weise gelangt das Fluid in das Innere der Ventilkammer 15.

Nunmehr kann das Fluid entweder durch die Durchgangsbohrung 13 oder abhängig von der Schaltstellung des Ventils durch die Durchgangsbohrung 26 entweichen. In der dargestellten Schaltposition ist der Ventilsitz 14 durch den Ventilkörper 12 geschlossen, während der Ventilsitz 27 geöffnet ist. Die Fluidströmung verläuft in dieser Schaltstellung demnach hin zur Ausgangsleitung 23.

Nach dem Umschalten mit Hilfe eines Steuerimpulses durch die Steuerspule 3 wird der Ventilsitz 27 geschlossen und zugleich der Ventilsitz 14 geöffnet, so dass die Fluidströmung über die Durchgangsbohrung 13 hin zum Anschlussrohr 22 erfolgt. Die Wirkungsweise der Steuerspule 3 sowie der Permanentmagnete 9 und 10 entspricht hierbei vollkommen dem vorgenannten Ausführungsbeispiel.

Wie anhand des Dichtungselementes 32 veranschaulicht wird, ist für einen möglichst dichten Abschluss zwischen dem einen Polschuh 5 und dem Ventilgehäuse 2 Sorge zu tragen. Dies wird nur beispielhaft mit Hilfe eines ringförmigen Dichtungselementes verwirklicht. Es könnte auch eine flächige Verpressung oder Verlötung vorgesehen werden. Eine solche Anordnung würde dem anhand von Figur 1 dargestellten Ausführungsbeispiel entsprechen.

In entsprechender Weise ist das zentrale Rohr 24 gegenüber dem Polschuh 6 abzudichten. Auch hier kann auf nicht näher dargestellte Weise bei Bedarf ein Dichtelement eingesetzt werden. In der Ausführung gemäß Figur 2 liegt das zentrale Rohr 24 flächig an, so dass sich ein dichter Abschluss durch Verpressung oder Verlötung ergibt.

Wie anhand von Figur 2 erkennbar wird, kann durch eine Verpressung oder Verlötung das zentrale Rohr 24 sowohl in axialer als auch in radialer Richtung fixiert werden, was anhand der am zentralen Rohr 24 anliegenden Sicke 20 deutlich wird. In diesem Fall ist dafür Sorge zu tragen, dass die Sicke 20 nicht rundumlaufend anliegt, so dass stets ein ausreichender Durchgang zwischen dem Zwischenraum 29 und den Fluidkanälen 19 offenbleibt.

Die dargestellten Ausführungsformen stellen äußerst kompakte Bauformen dar, die mit einem äußerst geringen Fertigungsaufwand herzustellen sind und dabei bei hoher Dichtigkeit eine zuverlässige Dauerstabilität gewährleisten. Insbesondere wird durch die reduzierte Masse des Ventilkörpers 12 auch der jeweilige Aufprallimpuls auf den Ventilsitzen 14, 27 reduziert, so dass sich neben geringeren Betriebsgeräuschen auch eine bessere Verschleißfestigkeit im Vergleich zu bisher bekannten Ventilen ergibt.

### Bezugszeichenliste:

- 1: Ventil
- 2: Ventilgehäuse
- 3: Steuerspule
- 4: Adapterstück
- 5: Polschuh
- 6: Polschuh
- 7: Ringschulter
- 8: Ringschulter
- 9: Permanentmagnet
- 10: Permanentmagnet
- 11: Distanzring
- 12: Ventilkörper
- 13: Durchgangsbohrung
- 14: Ventilsitz
- 15: Ventilkammer
- 16: Sackbohrung
- 17: Kugelsitz
- 18: Abflachung
- 19: Fluidkanal
- 20: Sicke
- 21: Sicke
- 22: Anschlussrohr
- 23: Anschlussrohr
- 24: zentrales Rohr
- 25: Aufnahmebohrung
- 26: Durchgangsbohrung
- 27: Ventilsitz
- 28: Gehäusebereich
- 29: Zwischenraum
- 30: Bohrung
- 31: Zuleitung
- 32: Dichtungselement
- 33: Ringnut
- 34: Sicke

## Patentansprüche

1. Bistabiles, elektromagnetisches Ventil mit einer zwischen zwei Polschuhen angeordneten Ventilkammer und einem darin zwischen zwei Endstellungen verschiebbaren Ventilkörper, der als Magnetanker für wenigstens einen Permanentmagneten und für wenigstens eine Steuerspule ausgebildet ist, **dadurch gekennzeichnet, dass** der Permanentmagnet (9, 10) im Innenraum des Ventilgehäuses (2) angeordnet ist.

2. Ventil nach Anspruch 1, **dadurch gekennzeichnet, dass** die Ventilkammer (15) innerhalb der Steuerspule (2) angeordnet ist.

3. Ventil nach einem der vorgenannten Ansprüche, **dadurch gekennzeichnet, dass** wenigstens zwei Permanentmagnete (9, 10) vorgesehen sind.

4. Ventil nach einem der vorgenannten Ansprüche, **dadurch gekennzeichnet, dass** der bzw. die Permanentmagnete (9, 10) neben einem Ventilsitz (17, 27) angeordnet sind.

5. Ventil nach einem der vorgenannten Ansprüche, **dadurch gekennzeichnet, dass** die Polarisationsrichtung der Permanentmagnete (9, 10) in axialer Richtung verläuft.

6. Ventil nach einem der vorgenannten Ansprüche, **dadurch gekennzeichnet, dass** der Permanentmagnet bzw. die Permanentmagnete (9, 10) als Ringmagnet ausgebildet sind.

7. Ventil nach einem der vorgenannten Ansprüche, **dadurch gekennzeichnet, dass** ein Distanzring (11) zwischen zwei Ringmagneten (9, 10) vorgesehen ist.

8. Ventil nach einem der vorgenannten Ansprüche, **dadurch gekennzeichnet, dass** der als Magnetanker ausgebildete Ventilkörper (12) kugelförmig ist.

9. Ventil nach einem der vorgenannten Ansprüche, **dadurch gekennzeichnet, dass** ein Führungsring (11) für den Ventilkörper (12) vorgesehen ist.

10. Ventil nach einem der vorgenannten Ansprüche, **dadurch gekennzeichnet, dass** der Führungsring für den Ventilkörper (12) als Distanzring (11) zwischen den Ringmagneten (9, 10) vorgesehen ist.

11. Ventil nach einem der vorgenannten Ansprüche, **dadurch gekennzeichnet, dass** ein Filterelement (11) vorgesehen ist.

12. Ventil nach einem der vorgenannten Ansprüche, **dadurch gekennzeichnet, dass** das Filterelement (11) als Führungsring für den Ventilkörper ausgebildet ist.

13. Ventil nach einem der vorgenannten Ansprüche, **dadurch gekennzeichnet, dass** das Filterelement (11) als Distanzring zwischen den Ringmagneten (9, 10) ausgebildet ist.

14. Ventil nach einem der vorgenannten Ansprüche, **dadurch gekennzeichnet, dass** das Ventilgehäuse (2) aus einem Rundrohr gebildet ist.

15. Ventil nach einem der vorgenannten Ansprüche, **dadurch gekennzeichnet, dass** das Gehäuse (2) einstückig ausgebildet ist.

16. Ventil nach einem der vorgenannten Ansprüche, **dadurch gekennzeichnet, dass** ein oder mehrere Fluidkanäle (19) an einem Polschuh (6) außerhalb der Ventilachse angebracht sind.

17. Ventil nach einem der vorgenannten Ansprüche, **dadurch gekennzeichnet, dass** mehrere rundum verteilte Fluidkanäle (19) außerhalb der Ventilachse an einem Polschuh (6) angebracht sind.

18. Ventil nach einem der vorgenannten Ansprüche, **dadurch gekennzeichnet, dass** ein Polschuh (6) einen nicht kreisförmigen Außenquerschnitt aufweist.

19. Ventil nach einem der vorgenannten Ansprüche, **dadurch gekennzeichnet, dass** die außerhalb der Ventilachse befindlichen Fluidkanäle (19) an wenigstens einem Permanentmagneten (9, 10) vorbeigeführt werden.

20. Ventil nach einem der vorgenannten Ansprüche, **dadurch gekennzeichnet, dass** wenigstens ein Polschuh (5, 6) mit dem Gehäuse verpresst oder verlötet ist.

21. Ventil nach einem der vorgenannten Ansprüche, **dadurch gekennzeichnet, dass** wenigstens ein Dichtungselement (32) zwischen einem Polschuh (5) und dem Ventilgehäuse (23) vorgesehen ist.

22. Ventil nach einem der vorgenannten Ansprüche, **dadurch gekennzeichnet, dass** eine Sicke (20, 21) in das Ventilgehäuse (2) zur Fixierung der inneren Bauelemente vorgesehen ist.

23. Ventil nach einem der vorgenannten Ansprüche, **dadurch gekennzeichnet, dass** der Führungs- und/oder Filter- und/oder Distanzring (11) in axialer und in radialer Richtung fluiddurchlässig ausgebildet ist.

24. Ventil nach einem der vorgenannten Ansprüche, **dadurch gekennzeichnet, dass** ein äußeres Grobfilter vorgesehen ist.

25. Ventil nach einem der vorgenannten Ansprüche, **dadurch gekennzeichnet, dass** es als 2/2 Wegeventil ausgebildet ist.

26. Ventil nach einem der vorgenannten Ansprüche, **dadurch gekennzeichnet, dass** es als 3/2 Wegeventil ausgebildet ist.

27. Ventil nach einem der vorgenannten Ansprüche, **dadurch gekennzeichnet, dass** ein zentrales Rohr fluiddicht innerhalb des Ventilgehäuses (2) mit einem Polschuh (6) verbunden ist.

28. Ventil nach einem der vorgenannten Ansprüche, **dadurch gekennzeichnet, dass** ein Dichtelement zwischen dem zentralen Rohr (24) und dem zugehörigen Polschuh (6) vorgesehen ist.

29. Ventil nach einem der vorgenannten Ansprüche, **dadurch gekennzeichnet, dass** rohrförmige Ventilgehäuse als T-Stück oder Y-Stück ausgebildet ist.

30. Kälteerzeugungskreis für eine Kühlanlage, insbesondere mit mehreren Kühlräumen, mit einem Kompressor, einem Kondesator, mehreren Verdampfern, die jeweils einem der Kühlräume zugeordnet sind sowie wenigstens einem elektrischen Steuerventil zur Verbindung des Kondensators mit einem oder mehreren der Verdampfer entsprechend vorbestimmten Betriebsarten, **dadurch gekennzeichnet, dass** das Steuerventil (1) gemäß einem der vorgenannten Ansprüche ausgebildet ist.

31. Haushaltsgerät mit einem Kälteerzeugungskreis, insbesondere Kühlschrank oder Kühltruhe, **dadurch gekennzeichnet, dass** der Kälteerzeugungskreis gemäß Anspruch 30 ausgebildet ist.
